# EUROPEAN PATENT APPLICATION

(11) **EP 3 239 868 A1**
(43) Date of publication of application: **01.11.2017**
(21) Application number: 17168676.9
(22) Date of filing: 28.04.2017
(51) Int. Cl.: G06F 17/50

(54) **SYSTEM FOR REALIZING A PIPE COUPLING, METHOD FOR IDENTIFYING A COUPLING DEVICE, AND A DATA CARRIER**

(30) Priority: 28.04.2016 NL 1041843
(71) Applicant: Wavin B.V., 8011 CW Zwolle (NL)
(72) Inventor: Hoogerbeets, Ramon, 7425EK Deventer (NL)
(74) Representative: Hoffmann Eitle

(57) **Abstract**

A system for realizing a pipe coupling between a first pipe and a second pipe, the system comprising at least a first carrier part carrying a computer implemented design method and a second carrier part carrying a database which comprises a number of predetermined coupling conditions and for each predetermined coupling condition one coupling device.

## Description

The present invention relates to the field of realizing a pipe infrastructure having a realizable pipe coupling between a first pipe and a second pipe, and, in particular, to the identification of a coupling device for coupling two pipes. Such a coupling device may be used in pipe systems such as water supply or drainage pipe systems.

The term coupling device as used in this application encompasses both one-piece coupling devices consisting of a single element and multi-piece coupling devices consisting of two or more elements from a predetermined group of elements.

Designing a pipe coupling and identifying a suitable coupling device can be very challenging and time-consuming. A reason for this is that a huge number of choices exist for a particular combination of a first, a second pipe and a suitable coupling device. After all, pipe diameters and the orientations of pipes are, in principle, continuously variable. In addition, a reservoir of constituent elements for a coupling device may be very large.

There is an abundance of possible combinations of a first pipe, a second pipe, and a coupling device for coupling the two pipes. This may cause inefficiencies during the realization of a new pipe infrastructure or when modernizing an existing pipe infrastructure. For example, a designer may erroneously assume that parts of a designed structure can be manufactured. Therefore, a pipe structure may have to be redesigned. Alternatively, manufactured parts may cause inconveniences in a pipe infrastructure, necessitating the redesigning of parts or, for example, the sawing off and the replacing of a particular part of a pipe, etc.

There is a need for a system for realizing a pipe coupling and for a method for identifying a coupling device which address at least one of the above mentioned shortcomings.

Aspects of this disclosure are defined by the claims below.

### GENERAL DESCRIPTION

According to one aspect, a system for realizing a pipe coupling between a first pipe and a second pipe is provided. The system comprises at least a first carrier part carrying a computer implemented design method and a second carrier part carrying a database which comprises a number of predetermined coupling conditions and for each predetermined coupling condition one coupling device. The first carrier part and the second carrier part may be parts of the same data carrier or of different data carriers.

Each predetermined coupling condition includes a first predetermined diameter of the first pipe, a second predetermined diameter of the second pipe, and a predetermined angle between the first pipe and the second pipe when positioned so as to be coupled. Each coupling device consists of at least one element that is in a predetermined group of elements.

The design method is restricted to designing on the basis of the predetermined coupling conditions, a set of pipes having for each of the predetermined pipe diameters a pipe, and a set of each of the elements. The set of pipes and the set of each of the elements are both part of a range of products that is available without further need for designing any product of that range.

The restriction of the design method leads to a reduction of complexity of trial and error when realizing a pipe coupling and, hence, to an increase of efficiency in the process of constructing a pipe infrastructure.

Preferably, at least one of the set of pipes and/or one of the set of elements being part of the range of products that are available fulfill a predetermined industrial standard, industrial norm, technical standard, and/or technical norm (for example, a DIN-norm) etc. Even more preferably, at least 80%, 90%, or (most preferably) all of the set of pipes and/or at least 80%, 90%, or (most preferably) all of the set of elements being part of a range of products that are available fulfill a predetermined industrial standard, industrial norm, technical standard, and/or technical norm etc. The design method therefore preferably or even exclusively offers design options with tested and certified products conforming to the technical/industrial regulations. This further promotes the efficiency while realizing pipe infrastructure as the actual use of a designed product will not stand in conflict with any technical norm requirements.

There is no need to still go through the phase of designing any of the products of the mentioned range of products. They are preferably already manufactured or they are at least ready for manufacturing. Thus, each pipe coupling designed using the described system is manufacturable without a delay resulting from designing a new product or redesigning an existing product. The designed pipe coupling can thus be swiftly designed, ordered, and pipe infrastructure building processes can be performed efficiently. Depending on the embodiment of the system, a particular product from the range of products may already be manufactured or they may, even though already designed, still need to be manufactured. In any case, the products are known and manufacturable without a need for designing.

The system preferably further comprises the set of pipes having for each of the predetermined pipe diameters a pipe and a set of each of the elements. This increases the efficiency even further as all the products of interest are very quickly available.

Preferably, the system comprises the range of products. In this case, a maximal efficiency is provided for designing pipe couplings irrespective of which elements are used for a particular pipe coupling.

The disclosure also relates to a method for identifying a coupling device. The various aspects of this method correspond to analogous aspects of a system for realizing a pipe coupling. Preferable aspects of the system and of the method are, hence, interchangeable but will, for the sake of conciseness, not be exhaustively separately described for the system and for the method. This means that any preferable aspect of the system gives rise to an analogous preferable aspect of the method, and vice versa.

According to one aspect, a method is provided for identifying a coupling device for coupling a first pipe and a second pipe which is to be branched off from the first pipe. The method includes the steps of: providing a database including a number of predetermined coupling conditions and for each predetermined coupling condition one coupling device; letting a user specify, using a user interface, a coupling condition for a first pipe and a second pipe to be connected, wherein it is imposed that merely predetermined coupling conditions can be specified as coupling conditions; and identifying a coupling device on the basis of the database for the specified coupling condition and outputting the identified coupling device to the user interface.

According to this aspect, it is not possible to specify coupling conditions at the user interface which are not predetermined coupling conditions. Thus, the identification of a coupling device can be performed particularly efficiently. The user is automatically led to specify predetermined (rather than other) coupling conditions. The user is, hence, always provided with an identified coupling device corresponding to the specified coupling condition as an output. It is ensured that a user cannot waste any time in exploring situations for which no solution is available.

According to another aspect, a method is provided for identifying a coupling device for coupling a first pipe and a second pipe which is to be branched off from the first pipe, the method including the steps of: providing a database including a number of predetermined coupling conditions and for each predetermined coupling condition one coupling device; letting a user specify, using a user interface, a coupling condition for a first pipe and a second pipe to be connected; determining (a) that the specified coupling condition is one of the predetermined coupling conditions, or (b) that the specified coupling condition is not one of the predetermined coupling conditions; wherein determining (a) includes identifying, for the specified coupling condition, a coupling device on the basis of the database and outputting the identified coupling device to the user interface; and wherein determining (b) includes replacing the specified coupling condition with a predetermined coupling condition as a replacement condition and identifying a coupling device on the basis of the database for the replacement condition and outputting the identified coupling device to the user interface.

This aspect offers somewhat more freedom to a user during the step of specifying a coupling condition while efficiency is nevertheless promoted by virtue of outputting a suitable coupling device based on a replacement condition if the specified coupling condition is not a predetermined coupling condition.

The step of determining whether the specified coupling condition is a predetermined coupling condition reduces the complexity of the information processing involved in identifying a suitable coupling device. In other words, the method distinguishes between coupling conditions which are predetermined coupling conditions and other coupling conditions which are not predetermined coupling conditions. This allows avoiding the situation in which a user loses time while trying to identify a coupling device which may not be realizable using the predetermined group of elements. This may come at the cost of excluding the possibility of identifying some coupling devices which would be suitable for particular coupling conditions. This may result from the fact that such coupling conditions may not being included in the database as predetermined coupling conditions. In addition, the identification of a particular coupling device for some predetermined coupling condition may also be excluded because the database simply includes a different coupling device for that particular predetermined coupling condition.

Preferably, a user may freely vary the angle between the pipes when positioned so as to be coupled. If the angle specified by the user does not form part of a predetermined coupling condition, the specified coupling condition may then be replaced with a predetermined coupling condition, i.e., the replacement condition. The diameters of the first pipe and the second pipe are preferably predetermined diameters corresponding to pipes which are in a range of products that is available without a further need for designing any product of that range up to availability of the range of products.

For example, if the user specifies an angle of 47° between the pipes while the database merely contains a predetermined coupling condition involving an angle of 50°, then 47° may be replaced with 50°. Preferably, a tolerance is provided of between 1° and 5°. A tolerance of 3° is especially preferable. To provide an example, the latter tolerance means in practice that any user-specified angle between 47° and 53° is set to 50° (one of the angles corresponding to a coupling condition with which a coupling device is associated in the database). Analogous statements hold for other angles. More generally, a specified angle may be replaced with the 'nearest' angle for which a predetermined coupling condition exists. In other words, for the replacement condition, a replacement angle may be chosen such that the difference between (the absolute values of) the specified angle and the replacement angle is minimized. For ambiguous situations, a suitable criterion may be established such as always choosing the larger/largest or the smaller/smallest angle, or, choosing the angle corresponding to a predetermined coupling condition associated with the more/most frequently employed coupling device, etc.

According to another aspect, a method is provided for identifying a coupling device for coupling a first pipe and a second pipe which is to be branched off from the first pipe, the method including the steps of: providing a database including a number of predetermined coupling conditions and for each predetermined coupling condition one coupling device; letting a user specify, using a user interface, a coupling condition for a first pipe and a second pipe to be connected; determining (a) that the specified coupling condition is one of the predetermined coupling conditions, or (b) that the specified coupling condition is not one of the predetermined coupling conditions; wherein determining (a) includes identifying, for the specified coupling condition, a coupling device on the basis of the database and outputting the identified coupling device to the user interface; and wherein determining (b) includes signaling, at the user interface, that no coupling device has been identified.

Signaling at the user interface that no coupling device is identified promotes efficiency. A user is not misled to believe that a particular specified coupling condition might correspond to a coupling device of interest. A user can swiftly continue specifying coupling conditions to quickly find 'a hit', i.e., a condition for which a predetermined coupling condition is available. The signaling can be effected in any suitable form. For example, when using the method as a computer-implemented design method, a message signaling the absence of a coupling device may be output on a computer screen. Alternatively, a design on a screen can be depicted in a deviating color (e.g., red) when no coupling device is identified, or, e.g., a colored exclamation mark can be shown on the screen, etc. Preferably, such a signal is shown when a user tries to specify that the diameter of the second pipe is larger than the diameter of the first pipe.

According to any of these aspects, the coupling device consists of at least one element that is in the predetermined group of elements. Typical examples of a coupling device consist of, e.g., between one and eight elements from the mentioned predetermined group of elements including (but not limited to) a T-piece connector (branching connector). The predetermined group of elements may, e.g., consist of those elements which form part of a range of products that is available without a further need for designing any product of that range up to availability of the range of products.

The identification process focusses on predetermined coupling scenarios when presented by predetermined coupling conditions by allocating at least one particular coupling device to said predetermined coupling device rather than exhaustively producing all possible solutions, i.e., listing all possible coupling devices. The simplification may involve loosing possible solutions in the sense of not being able to identify all possible coupling devices for a specified coupling condition. The loss of potential solutions is, however, outweighed by the benefits of a reduction of complexity in the information processing associated with identifying a coupling device and a corresponding increase in efficiency.

The set of all predetermined coupling conditions may be regarded to form a subset of all 'possible' coupling conditions. The selection of the set may be based on which products are available in the sense of already designed or even already manufactured. However, the set of all predetermined coupling conditions may also be larger. Alternatively or in addition thereto, the data input into the database may be based on technical considerations such as a prioritization with respect to particularly important pipe coupling scenarios. For example, pipes with particular diameters or combinations of two pipes with particular diameters might be prioritized over combinations of pipes and angles of relative orientation which are not included in the database as predetermined coupling conditions.

Further preferable aspects of the method will be described in the following. These further preferable aspects may be freely combined mutually and/or with any one of the previously described aspects.

For each predetermined coupling condition, at least one coupling device is provided in the database. It is preferable when only one coupling device is provided for at least 90% of all predetermined coupling conditions, preferably for 95%, 98%, 99%, and most preferably for 100% of all predetermined coupling conditions. The database thus rarely/never (for the case of 100%) provides multiple solutions for a particular pipe coupling scenario associated with one predetermined coupling condition.

At least for some aspects, the same coupling device may be assigned to two or several predetermined coupling conditions. The identification of one coupling device for a given predetermined coupling condition is unique for most or even for all of the predetermined coupling conditions.

Restricting to only one coupling device for most or even for each of the predetermined coupling conditions leads to a significant reduction in complexity at the cost of disregarding possible options. However, this loss of options is outweighed by the overall gain in efficiency in identifying a coupling device. This in particular promotes an increase in efficiency in the technical realization of a pipe system and infrastructure. The method is, hence, also particularly suited to be used in situations involving a lot of time pressure, for example, when a pipe system is being realized 'in situ' on a construction site.

The user interface may be a data processing device such as a PC or the like. When a user knows which pipes are to be coupled, he may in this case specify the coupling conditions for the first and the second pipe using the user interface. The specification can, for example, be effected using a graphical interface of a computer program by drawing pipes on the screen. Drawing the pipes then amounts to specifying a particular coupling condition.

According a preferred aspect, the method includes the step of defining a composition of pipe coupling conditions so as to include a first diameter of the first pipe and a second diameter of the second pipe, and an angle between the first and the second pipe when positioned so as to be coupled. The invention also encompasses aspects wherein the composition of pipe coupling conditions consists of said first and second diameters and said angle. The composition may be defined in a computer-implemented program (e.g., on a data carrier), or the definition may, e.g., be realized in the database.

Singling out technically relevant coupling conditions by defining the type of composition of coupling conditions to be used reduces the complexity of the information processing involved during the identification of a coupling device. The method is therefore particularly time-efficient. The composition of pipe coupling conditions may be considered to constitute an act of 'typifying' coupling conditions. In other words, fixing the composition amounts to choosing what constitutes a pipe coupling condition. This choice is based on reducing the number of parameters to those which are considered as particularly technically relevant.

A composition including or consisting of the first and the second diameters as well as the angle between the first and the second pipes may also be realized in the form of a composition wherein other parameters are defined, wherein these other parameters, however, enable determining the diameters and the angle. In other words, defining a composition including/consisting of such 'equivalent' parameters may be regarded as defining a composition including/consisting of the mentioned first and second diameters and the angle.

Preferably, the composition further includes a spatial orientation of the first pipe and/or a spatial orientation of the second pipe. It is especially preferable for the composition to include the spatial orientations of the first pipe and of the second pipe. A spatial orientation may be encoded in the form of any suitable parameter(s) specifying a direction in three dimensional space. For example, the spatial orientation may be provided in the form of specifying Cartesian, spherical, polar or other coordinates of a three dimensional (unit) vector.

An advantage resulting from including a spatial orientation in the definition of the composition is that different coupling devices may, in the database, be allocated to predetermined coupling conditions involving different spatial orientations but being otherwise identical. This allows taking into account particular requirements to be imposed on a pipe coupling depending on the spatial orientation(s) of one or both of the pipes. For example, according to certain national laws, a particular type of element might not be allowed in a coupling device when the pipes to be connected are oriented in a particular way. For example, a symmetric T-piece may not be allowed in a coupling device connecting two pipes which both extend in the horizontal plane.

Preferably, the composition includes a distance between the first pipe and the second pipe when positioned so as to be coupled. In this case, the coupling device can be fine-tuned to said distance, for example, by comprising one or several additional elements from the predetermined group of elements if the distance is longer or by leaving out certain elements when the distance is shorter. The distance may, for example, be the shortest distance between (and end portion of) the second pipe and the first pipe. Alternatively, the distance may be a distance between an end portion of the second pipe in a direction extending along a center axis of the second pipe.

Preferably, the composition of pipe coupling conditions includes a material of at least a part of the first pipe and/or a material of at least a part of the second pipe. The composition may also include the material of the entire first pipe and/or of the entire second pipe, or several (preferably: all) of the materials of various parts of the first pipe and/or of the second pipe.

An advantage associated with the composition including a pipe material is that the coupling device to be identified can be fine-tuned to said material. Different coupling devices may be identified for boundary conditions merely differing through different pipe material. For example, a different coupling device may be provided in the database with a case in which the first and second pipes are made of PP or PE in comparison to a case in which the first and second pipes are made of metal. Preferably, a coupling device is identified which has a similar (or the same) thermal expansion coefficient as the first and/or second pipes. This takes into account the different technical requirements which need to be met by coupling devices associated with different types of pipe systems. Preferably, a coupling device is chosen so as to consist of a minimal number of elements. In other words, a coupling device consisting of a smaller number of elements, rather than another theoretically suitable coupling device consisting of a larger number of elements, may be preferentially included in the database. This pre-selection of suitable coupling devices reduces potential ambiguities in the database and further promotes efficiency within the framework of realizing pipe infrastructures.

Preferably, a further coupling device for coupling the first pipe and a third pipe which is to be branched off from the first pipe is identified. In this case, the composition of pipe coupling conditions preferably includes the distance between the second pipe and the third pipe. Restrictions with respect to what coupling devices are suitable in situations in which different branching points are close to one another can, hence, be taken into account. For example, when there is little distance between the branching point between the first and the second pipe and the branching point between the first and the third pipe, it might not be suitable to use anti-symmetric T-piece connectors for the couplings arranged such that the second and third pipes are located too close to one another or so that they would even collide. The method can in this case take the relative locations of the branching points into account, and identify coupling devices which take this into account. For example, anti-symmetric T-piece connectors may be placed so as to be oriented away from a neighboring branching point so that more distance can be maintained between the second and the third pipe.

The former may be generalized from two to three or more branching points so that the method also increases the information processing efficiency associated with identifying several coupling devices in a pipe system wherein two or more branching points are located to be in the vicinity of one another.

According to a preferred aspect, the database includes only one coupling device for each predetermined coupling condition. This leads to a further gain in efficiency which outweighs the loss of potential options in terms of suitable coupling device which might, theoretically, be formed on the basis of the predetermined group of elements.

Preferably, the coupling device comprises one or several elements selected from the group including at least: a symmetric T-piece connector, an anti-symmetric T-piece connector, a diameter transition element, a curved pipe piece, and a bushing. Preferably, the coupling device comprises at least a T-piece connector.

According to another aspect of this disclosure, a data carrier is provided. The data carrier stores a program for identifying a coupling device for coupling a first and a second pipe to be branched off from the first pipe, the coupling device consisting of at least one element that is in a predetermined group of elements. The data carrier stores a database including a number of predetermined coupling conditions and for each predetermined coupling condition one coupling device. As used here, the term data carrier may refer to a single data carrier carrying both the data base and the program, or to a first carrier part and a second carrier part distributed to two data carriers as discussed above.

When executed on a computer, the program is configured to perform the steps of letting a user specify, using a user interface, a coupling condition for a first pipe and a second pipe be connected, wherein it is imposed that merely a predetermined coupling conditions can be specified as a coupling condition; and identifying, for the specified coupling condition, a coupling device on the basis of the database and outputting the identified coupling device to the user interface.

According to another aspect, the program is, when executed on a computer, configured to perform the steps of letting a user specify, using a user interface, a coupling condition for a first pipe and a second pipe be connected; determining (a) that the specified coupling condition is one of the predetermined coupling conditions, or (b) that the specified coupling condition is not one of the predetermined coupling conditions; wherein determining (a) includes identifying, for the specified coupling condition, a coupling device on the basis of the database and outputting the identified coupling device to the user interface; and wherein determining (b) includes replacing the specified coupling condition with a predetermined coupling condition as a replacement condition and identifying a coupling device on the basis of the database for the replacement condition and outputting the identified coupling device to the user interface.

According to another aspect, the program is, when executed on a computer, configured to perform the steps of letting a user specify, using a user interface, a coupling condition for a first pipe and a second pipe be connected; determining (a) that the specified coupling condition is one of the predetermined coupling conditions, or (b) that the specified coupling condition is not one of the predetermined coupling conditions; wherein determining (a) includes identifying, for the specified coupling condition, a coupling device on the basis of the database and outputting the identified coupling device to the user interface; and wherein determining (b) includes signaling, at the user interface, that no coupling device has been identified.

The method preferably further includes the step of providing or letting a user specify a default category of coupling conditions. The provision of the default category refers to the situation in which a predetermined default category is (at least initially) fixed even before a user makes any specific selection. The provision of the default category can, for example, be realized in the form of some default setting in a computer program in the form of which the method is implemented. Preferably, a user is given the option of changing the default setting, i.e., the default category of coupling conditions. The provision and/or specification of the default category may in practice change a setting in a computer-implemented program and/or in the database.

The step of letting a user specify the coupling conditions preferably includes: letting a user specify a provisional coupling condition wherein possible specifications are confined to the default category of coupling conditions; and identifying, for the specified provisional coupling condition, a default-conform coupling device on the basis of the database and outputting the identified default-conform coupling device to the user interface.

Preferably, the step of letting a user specify the coupling condition further includes: letting a user replace the provisional coupling condition with a non-default type coupling condition falling outside of the default category of coupling conditions; and identifying, for the non-default type coupling condition, a non-default-conform coupling device on the basis of the database and replacing, as an output to the user interface, the identified default-conform coupling device with the identified non-default-conform coupling device.

A user can therefore conveniently work with a default setting, i.e., the default category of coupling conditions, when a large number of the coupling conditions he or she is interested in fall under the default category. Nevertheless, a user is offered the possibility of easily switching to a non-default coupling condition whenever needed.

According to one embodiment, the default category of coupling conditions is defined by the first pipe being oriented horizontally and the second pipe being oriented vertically. In this case, a default-conform coupling device suited to couple a horizontally and a vertically oriented pipe may be identified first. The user is offered the option of replacing the specified default type coupling condition with a non-default type coupling condition whenever needed. The latter may in this case, e.g., involve both the first and second pipes being oriented horizontally. A non-default-conform coupling device suited to couple two pipes extending in the horizontal plane is then identified. This further promotes efficiency as the user can already make some pre-selection for the type of coupling conditions to be examined. Switching to non-default coupling conditions whenever needed may require less effort than always specifying the full coupling conditions 'from scratch'.

More generally, the default category is preferably defined by the first pipe having a spatial orientation angle falling within a first predetermined range and/or the second pipe having a spatial orientation angle falling within a second predetermined range. Another preferred option is that the definition of the default category includes or consists of that the first pipe is oriented in any predetermined first direction and/or that the second pipe is oriented in any predetermined second direction. Preferable examples for the first predetermined direction are a horizontal direction, a vertical direction, or a direction at a 45° angle with respect to the vertical and to the horizontal directions. Likewise, preferable examples for the second predetermined direction include a horizontal direction, a vertical direction, or a direction at a 45° angle with respect to the vertical and to the horizontal directions. Further, it is of course possible to combine a range of orientations for one pipe and a particular orientation for the other pipe as the default category of coupling conditions.

The database and the program stored on the data carrier enable a computer to carry out the method according to any of the aspects discussed above. Reference is therefore made to the explanations of and the advantages associated with the various aspects of the corresponding method. The data carrier may of course store aspects of the program and of the database so that a computer can carry out any one of the previously discussed aspects of the method on the basis of the information stored on the data carrier. In this sense, every (preferred) aspect of the method discussed above is associated with a corresponding (preferred) aspect of the data carrier.

Many additional variations and modifications are possible and are understood to fall within the framework of the invention.

## Claims

1. A system for realizing a pipe coupling between a first pipe and a second pipe, the system comprising at least a first carrier part carrying a computer implemented design method and a second carrier part carrying a database which comprises a number of predetermined coupling conditions and for each predetermined coupling condition one coupling device, each predetermined coupling condition including a first predetermined diameter of the first pipe, a second predetermined diameter of the second pipe, and a predetermined angle between the first pipe and the second pipe when positioned so as to be coupled, each coupling device consisting of at least one element that is in a predetermined group of elements, wherein the design method is restricted to designing on the basis of the predetermined coupling conditions,
a set of pipes having for each of the predetermined pipe diameters a pipe and a set of each of the elements both being part of a range of products that is available without a further need for designing any product of that range.

2. A system according to claim 1, wherein the system further comprises the set of pipes having for each of the predetermined pipe diameters a pipe and the set of each of the elements.

3. A system according to claim 1 or 2, wherein the system comprises the range of products.

4. A method for identifying a coupling device for coupling a first pipe and a second pipe which is to be branched off from the first pipe, the coupling device consisting of at least one element that is in a predetermined group of elements, and the method including the steps of:
- providing a database including a number of predetermined coupling conditions and for each predetermined coupling condition one coupling device;
- letting a user specify, using a user interface, a coupling condition for a first pipe and a second pipe to be connected, wherein it is imposed that merely predetermined coupling conditions can be specified as coupling conditions;
- identifying, for the specified coupling condition, a coupling device on the basis of the database and outputting the identified coupling device to the user interface.

5. A method for identifying a coupling device for coupling a first pipe and a second pipe which is to be branched off from the first pipe, the coupling device consisting of at least one element that is in a predetermined group of elements, and the method including the steps of:
- providing a database including a number of predetermined coupling conditions and for each predetermined coupling condition one coupling device;
- letting a user specify, using a user interface, a coupling condition for a first pipe and a second pipe to be connected;
- determining (a) that the specified coupling condition is one of the predetermined coupling conditions, or (b) that the specified coupling condition is not one of the predetermined coupling conditions;
- wherein determining (a) includes identifying, for the specified coupling condition, a coupling device on the basis of the database and outputting the identified coupling device to the user interface; and
- wherein determining (b) includes replacing the specified coupling condition with a predetermined coupling condition as a replacement condition and identifying a coupling device on the basis of the database for the replacement condition and outputting the identified coupling device to the user interface.

6. A method for identifying a coupling device for coupling a first pipe and a second pipe which is to be branched off from the first pipe, the coupling device consisting of at least one element that is in a predetermined group of elements, and the method including the steps of:
- providing a database including a number of predetermined coupling conditions and for each predetermined coupling condition one coupling device;
- letting a user specify, using a user interface, a coupling condition for a first pipe and a second pipe to be connected;
- determining (a) that the specified coupling condition is one of the predetermined coupling conditions, or (b) that the specified coupling condition is not one of the predetermined coupling conditions;
- wherein determining (a) includes identifying, for the specified coupling condition, a coupling device on the basis of the database and outputting the identified coupling device to the user interface; and
- wherein determining (b) includes signaling, at the user interface, that no coupling device has been identified.

7. A method for identifying a coupling device according to any one of the claims 4 to 6, including the step of defining a composition of pipe coupling conditions so as to include a first diameter of the first pipe and a second diameter of the second pipe, and an angle between the first and the second pipe when positioned so as to be coupled.

8. A method for identifying a coupling device according to claim 7, wherein the composition includes a spatial orientation of the first pipe and/or a spatial orientation of the second pipe and/or a distance between the first pipe and the second pipe when positioned so as to be coupled and/or a material of at least a part of the first pipe and/or a material of at least a part of the second pipe.

9. A method for identifying a coupling device according to claim 7 or 8, wherein a further coupling device is identified for coupling the first pipe and a third pipe which is to be branched off from the first pipe, and wherein the composition of pipe coupling conditions includes a distance between the second pipe and the third pipe.

10. A method for identifying a coupling device according to any one of claims 4 to 9, wherein the database includes only one coupling device for each predetermined coupling condition.

11. A method for identifying a coupling device according to any one of claims 4 to 10, wherein the coupling device comprises one or several elements selected from the group including at least: a symmetric T-piece connector, an antisymmetric T-piece connector, a diameter transition element, a curved pipe piece, a bushing.

12. A method for identifying a coupling device according to any one of claims 4 to 11, further including the step of providing or letting a user specify a default category of coupling conditions, and wherein the step of letting a user specify the coupling condition includes:
- letting a user specify a provisional coupling condition while possible specifications are confined to the default category of coupling conditions; and
- identifying, for the specified provisional coupling condition, a default-conform coupling device on the basis of the database and outputting the identified default-conform coupling device to the user interface;
wherein the step of letting a user specify the coupling condition preferably further includes:
- letting a user replace the provisional coupling condition with a non-default type coupling condition which is not in the default category of coupling conditions; and
- identifying, for the non-default type coupling condition, a non-default-conform coupling device on the basis of the database and replacing, as an output to the user interface, the identified default-conform coupling device with the identified non-default-conform coupling device.

13. A method for identifying a coupling device according to claim 12, wherein the default category of coupling conditions is defined by the first pipe being oriented horizontally and the second pipe being oriented vertically.

14. A data carrier storing a program for identifying a coupling device for coupling a first and a second pipe to be branched off from the first pipe, the coupling device consisting of at least one element that is in a predetermined group of elements; wherein the data carrier stores a database including a number of predetermined coupling conditions and for each predetermined coupling condition one coupling device;
wherein the program, when executed on a computer, is configured to perform the steps of:
- letting a user specify, using a user interface, a coupling condition for a first pipe and a second pipe to be connected, wherein it is imposed by the program that merely a predetermined coupling condition can be specified as a coupling condition;
- identifying, for the specified coupling condition, a coupling device on the basis of the database and outputting the identified coupling device to the user interface.

15. A data carrier storing a program for identifying a coupling device for coupling a first and a second pipe to be branched off from the first pipe, the coupling device consisting of at least one element that is in a predetermined group of elements; wherein the data carrier stores a database including a number of predetermined coupling conditions and for each predetermined coupling condition one coupling device;
wherein the program, when executed on a computer, is configured to perform the steps of:
- letting a user specify, using a user interface, a coupling condition for a first pipe and a second pipe to be connected;
- determining (a) that the specified coupling condition is one of the predetermined coupling conditions, or (b) that the specified coupling condition is not one of the predetermined coupling conditions;
- wherein determining (a) includes identifying, for the specified coupling condition, a coupling device on the basis of the database and outputting the identified coupling device to the user interface; and
- wherein determining (b) includes replacing the specified coupling condition with a predetermined coupling condition as a replacement condition and identifying a coupling device on the basis of the database for the replacement condition and outputting the identified coupling device to the user interface.

16. A data carrier storing a program for identifying a coupling device for coupling a first and a second pipe to be branched off from the first pipe, the coupling device consisting of at least one element that is in a predetermined group of elements; wherein the data carrier stores a database including a number of predetermined coupling conditions and for each predetermined coupling condition one coupling device;
wherein the program, when executed on a computer, is configured to perform the steps of:
- letting a user specify, using a user interface, a coupling condition for a first pipe and a second pipe to be connected;
- determining (a) that the specified coupling condition is one of the predetermined coupling conditions, or (b) that the specified coupling condition is not one of the predetermined coupling conditions;
- wherein determining (a) includes identifying, for the specified coupling condition, a coupling device on the basis of the database and outputting the identified coupling device to the user interface; and
- wherein determining (b) includes signaling, at the user interface, that no coupling device has been identified.

17. A data carrier according to any one of claims 14 to 16, wherein the program, when executed on a computer, is configured to perform the step of defining a composition of pipe coupling conditions so as to include a first diameter of the first pipe and a second diameter of the second pipe, and an angle between the first and the second pipe when positioned so as to be coupled.

18. A data carrier according to claim 17, wherein the composition further includes a spatial orientation of the first pipe and/or a spatial orientation of the second pipe and/or a distance between the first pipe and the second pipe when positioned so as to be coupled and/or a material of at least a part of the first pipe and/or a material of at least a part of the second pipe.

19. A data carrier according to claim 17 or 18, wherein the program, when executed on a computer, is configured to perform the step of identifying a further coupling device for coupling the first pipe and a third pipe which is to be branched off from the first pipe, and wherein the composition of pipe coupling conditions includes a distance between the second pipe and the third pipe.

20. A data carrier according to any one of claims 17 to 19, wherein the database includes only one coupling device for each predetermined coupling condition.

21. A data carrier according to any one of claims 17 to 20, wherein the coupling device comprises one or several elements selected from the group including at least: a symmetric T-piece connector, an antisymmetric T-piece connector, a diameter transition element, a curved pipe piece, a bushing.

22. A data carrier according to claim 20 or 21, wherein the program, when executed on a computer, is further configured to perform the step of providing or letting a user specify a default category of coupling conditions, and wherein the step of letting a user specify the coupling condition includes:
- letting a user specify a provisional coupling condition while possible specifications are confined to the default category of coupling conditions; and
- identifying, for the specified provisional coupling condition, a default-conform coupling device on the basis of the database and outputting the identified default-conform coupling device to the user interface;
wherein the step of letting a user specify the coupling condition preferably further includes:
- letting a user replace the provisional coupling condition with a non-default type coupling condition which is not in the default category of coupling conditions; and
- identifying, for the non-default type coupling condition, a non-default-conform coupling device on the basis of the database and replacing, as an output to the user interface, the identified default-conform coupling device with the identified non-default-conform coupling device,
wherein the default category of coupling conditions is preferably defined by the first pipe being oriented horizontally and the second pipe being oriented vertically.
